# EUROPÄISCHE PATENTSCHRIFT

(11) **EP 0 491 660 B1**
(45) Veröffentlichungstag und Bekanntmachung des Hinweises auf die Patenterteilung: **11.09.1996**
(21) Anmeldenummer: 91810965.3
(22) Anmeldetag: 11.12.1991
(51) Int. Cl.: C09B 45/01, C09B 45/20, G01N 27/416

(54) **Verfahren zur Herstellung von Metallkomplexfarbstoffen**
Process for the preparation of metal complex dyestuffs
Méthode de préparation de colorants complexes métallifères

(30) Priorität: 18.12.1990 CH 4011/90
(43) Veröffentlichungstag der Anmeldung: 24.06.1992
(73) Patentinhaber: CIBA-GEIGY AG, 4002 Basel (CH)
(72) Erfinder: Schmidt, Wilhelm, Dr., W 7850 Lörrach (DE); Beck, Gerhard, Dr., W-7888 Rheinfelden (DE)

(56) Entgegenhaltungen:
- FR-A- 1 085 262
- CHEMICAL ABSTRACTS, Band 86, Nr. 2, 10. Januar 1977, Seite 36, Zusammenfassung Nr. 6375y, Columbus, Ohio, US; M.K. SAIKINA: "Polarographic study of the complexing of some monoazo dyes with cobalt and nickel ions", & NOV. POLYAROGR., TEZISY DOKL. VSES. SOVESHCH. POLYAROGR., 6TH 1975, 228
- ZEITSCHRIFT FÜR ANALYITSCHE CHEMIE, Band 269, 1974, Seiten 344-349, Springer-Verlag, Berlin, DE; A. NARAYANAN et al.: "Adsorption enrichment of some azo dye complexes on a carbon paste electrode and its application to the determination of small concentrations of cobalt and manganese"
- CHEMICAL ABSTRACTS, Band 105, Nr. 14, 6. Oktober 1986, Seite 78, Zusammenfassung Nr. 116519s, Columbus, Ohio, US; P.M. BERSIER et al.: "Polarography and voltammetry of dyes and intermediates", & TrAC, TRENDS ANAL. CHEM. (PERS. ED.) 1986, 5(4), 97-102
- CHEMICAL ABSTRACTS, Band 112, Nr. 4, 22. Januar 1990, Seite 636, Zusammenfassung Nr. 29964j, Columbus, Ohio, US; J. WANG et al.: "Simultaneous measurements of trace metals by adsorptive stripping voltammetry", & ELECTROANALYSIS (N.Y.) 1989, 1(3), 229-34

## Beschreibung

Die vorliegende Erfindung betrifft ein neues Verfahren zur Herstellung von Metallkomplexfarbstoffen unter Betriebsbedingungen, worin der Metallisierungsendpunkt mittels einer voltametrischen Methode bestimmt wird.

In den letzten Jahren ist man zunehmend bestrebt, Herstellungsverfahren für Metallkomplexfarbstoffe zu automatisieren und zu optimieren. Um hier zu befriedigenden und reproduzierbaren Ergebnissen zu gelangen, ist man auf Verfahren angewiesen, die sich durch folgende Kriterien auszeichnen: möglichst quantitative Ausbeute, reproduzierbar gute Qualität, hohe Zahl von Umsetzungen pro Zeiteinheit, geringe Abwasserlast, Durchführbarkeit unter Betriebsbedingungen und Automationsfähigkeit. Zudem wird heute unabhängig von der Qualität der Ausgangsmaterialien eine gleichbleibende Qualität der Verfahrensprodukte bei optimaler Ausbeute verlangt.

Bei der Herstellung von Metallkomplexfarbstoffen geht man bisher allgemein so vor, dass der Farbstoff mit der theoretisch bei stöchiometrischer Umsetzung benötigten Menge des Metallsalzes umgesetzt wird. Diese Verfahrensweise hat jedoch den Nachteil, dass der tatsächliche Metallisierungsendpunkt nicht genau erkannt wird, und auch aufgrund von Nebenreaktionen ein Ueberschuss an Farbstoff oder Metallsalz vorhanden ist. Hiermit sind Nachteile bezüglich der Qualität des Produktes und der Abwasserbelastung verbunden.

Aufgabe der Erfindung war es daher, ein Verfahren zu finden, das den genannten Anforderungen entspricht und insbesondere unter Betriebsbedingungen eingesetzt werden kann und sich zur automatisierten Durchführung der Reaktion eignet.

Es hat sich gezeigt, dass das weiter unten beschriebene Verfahren diesen Anforderungen genügt.

Gegenstand der vorliegenden Erfindung ist somit ein Verfahren zur Herstellung von Metallkomplexfarbstoffen unter Betriebsbedingungen, worin man mindestens einen Farbstoff mit einem metallabgebenden Mittel umsetzt, dadurch gekennzeichnet, dass die Zugabe des metallabgebenden Mittels oder des Farbstoffes vor Erreichung des Metallisierungsendpunktes diskontinuierlich erfolgt und der Metallisierungsendpunkt voltametrisch bestimmt wird.

Als Betriebsbedingungen sollen hier und im folgenden solche Bedingungen verstanden werden, bei denen die Umsetzung des Farbstoffs mit dem metallabgebenden Mittel in konzentrierten Lösungen oder Suspensionen ausgeführt wird. Als konzentrierte Lösungen sind solche bevorzugt, welche bei Raumtemperatur als Suspensionen vorliegen. Vorzugsweise sind die Lösungen oder Suspensionen wässrig.

Voltametrische Verfahren als solche sind bekannt (siehe z.B. G. Kraft, Z. Anal. Chem., Band 238 (1968), Seiten 321 bis 414). Bekannte voltametrische Verfahren sind als Analysenmethoden beschrieben, worin z.B. ein Metallsalz mit einem Komplexbildner titriert wird und der Verlauf der Titration mittels einer voltametrischen Methode verfolgt wird. Der Endpunkt der Titration wird üblicherweise anhand des Wendepunktes der erhaltenen Potentialkurve bestimmt. In bekannten analytischen Verfahren wird in verdünnten, von Verunreinigungen freien Lösungen gearbeitet. Zudem kann die zu titrierende Lösung der Analysenmethode optimal angepasst werden (z.B. bezüglich pH, Temperatur, Zusatzstoffe, wie z.B. Leitsalze), um die Auswertbarkeit der Potentialkurve zu erleichtem bzw. zu ermöglichen.

Unter Betriebsbedingungen wird jedoch im Unterschied zu Analysenmethoden eine möglichst hohe Raum-Zeit-Ausbeute angestrebt, so dass mit konzentrierten Lösungen oder Suspensionen gearbeitet wird. Diese enthalten zudem in der Regel noch Verunreinigungen. Durch die Produktionsbedingungen sind Verfahrensparameter, wie z.B. Temperatur und pH, weitestgehend festgelegt und der Zusatz weiterer, die Auswertbarkeit der Potentialkurven erhöhender Hilfsmittel kann Auswirkungen auf die Qualität der erhaltenen Verfahrensprodukte haben. Unter diesen Bedingungen kann die Voltametrie nicht ohne weiteres eingesetzt werden.

Es ist überraschend, dass das erfindungsgemässe Verfahren bei der Herstellung von Metallkomplexfarbstoffen unter Betriebsbedingungen eine Bestimmung des Metallisierungsendpunktes erlaubt, so dass kein unnötiger Überschuss an Farbstoff oder Metallsalz auftritt.

Die Metallisierung erfolgt in der Regel bei einer Temperatur von 0 bis 160°C, vorzugsweise 20 bis 100°C, wobei bei einer Temperatur oberhalb von 100°C in einem geschlossenen Gefäss unter Druck (Überdruck), von z.B. 1 bis 6 bar, gearbeitet wird.

Die in dem erfindungsgemässen Verfahren eingesetzten Farbstoffe enthalten metallisierbare Gruppen, wie z.B. Amino-, Hydroxyl- und/oder Carboxylgruppen.

Als metallisierbare Farbstoffe kommen neben wasserlöslichmachende Gruppen enthaltende Farbstoffe auch Dispersionsfarbstoffe, Solventfarbstoffe sowie Pigmente, wie z.B. die im Colour Index, Third Edition, Vol. 3 und 4 (1971) unter Disperse Dyes, Solvent Dyes und Pigments angegebenen, metallisierbare Gruppen enthaltenden Verbindungen, in Betracht.

Als Farbstoffe werden Einzelfarbstoffe oder Mischungen verschiedener Farbstoffe verwendet. Als Beispiele für Farbstoffe seien metallisierbare Mono-, Dis- oder Polyazofarbstoffe, Azomethine, Azaannulene, wie z.B. Phthalocyanine oder Porphine, Formazane, Anthrachinone, Phenole, Aniline, Dithiocarbamate, Dithiole sowie heterocyclische Verbindungen, wie z.B. 2,2′-Bipyridine, Isoindolinone, Pyrrole und Pyridine, genannt. Bevorzugt werden Mono-, Dis- oder Polyazofarbstoffe oder Azomethine verwendet. Vorzugsweise verwendet man Mono-, Dis- oder Polyazofarbstoffe, insbesondere Monoazofarbstoffe. Als Diazokomponenten kommen z.B solche der Benzol-, Naphthalin- oder heterocyclischen Reihe in Betracht. Als Kupplungskomponenten kommen z.B. solche der Benzol-, Naphthalin- oder heterocyclischen Reihe oder Acetessigsäureanilid in Betracht. Heterocyclische Kupplungskomponenten sind beispielsweise Pyrazolon oder Pyridin.

Die in dem erfindungsgemässen Verfahren verwendeten Farbstoffe können neben den metallisierbaren Gruppen die in Farbstoffen üblichen Substituenten enthalten.

Als Beispiele für derartige Substituenten seien genannt: C₁-C₈-Alkyl, C₁-C₈-Alkoxy, C₂-C₆-Alkanoyl, C₂-C₆-Alkanoylamino, C₁-C₆-Alkoxycarbonyl, C₁-C₆-Alkoxycarbonylamino, Benzoylamino, Amino, Hydroxy, Halogen, Sulfo, Nitro, Carboxy, Cyan, Phenyl, Sulfamoyl, N-C₁-C₄-Alkylaminosulfonyl, Phenylsulfonyl, Benzylsulfonyl, Phenylaminosulfonyl oder C₁-C₈-Alkylsulfonyl, wobei die Substituenten im Alkylteil oder im Phenylring durch einen oder mehrere der oben angegebenen Substituenten weitersubstituiert sein können.

Als metallabgebenden Mittel sind kupfer-, kobalt- oder nickelabgebende Verbindungen, insbesondere kobaltabgebende Verbindungen, bevorzugt. Es kommen z.B. die üblichen Salze oder Komplexverbindungen dieser Metalle in Betracht, wie z.B. Kupfer(II)-acetat, Kupfer(II)-sulfat, Kobalt(II)-sulfat, Kobalt(II)-acetat, frisch gefälltes Kobalt(II)-hydroxid, Nickelsulfat, Nickelchlorid; Sowie komplexe Metallverbindungen, aliphatische Dicarbonsäuren, Hydroxycarbonsäuren oder aromatische Hydroxycarbonsäuren, wie z.B. Kobalttartrat.

In einer bevorzugten Ausführungsform des erfindungsgemässen Verfahrens wird der Farbstoff vorgelegt und das metallabgebende Mittel zudosiert.

Weiterhin ist es bevorzugt, die Umsetzung des Farbstoffes mit dem metallabgebenden Mittel zum Metallkomplexfarbstoff kontinuierlich im Anschluss an die Herstellung des Farbstoffes, ohne zwischenzeitliche Isolierung des Farbstoffes, auszuführen. Hierbei wird zunächst der Farbstoff hergestellt und das erhaltene Reaktionsgemisch, ohne Isolierung des Farbstoffes, direkt mit dem metallabgebenden Mittel umgesetzt.

In einer weiteren bevorzugten Ausführungsform des erfindungsgemässen Verfahrens erfolgt die Umsetzung des Farbstoffes mit dem metallabgebenden Mittel in Gegenwart eines Oxidationsmittels (z.B. Wasserstoffperoxid oder Nitroverbindungen, wie z.B. 3-Nitrobenzolsulfonsäure), wobei sich insbesondere das Einblasen von Luft in die Reaktionsmischung als vorteilhaft erwiesen hat. Für diese Ausführungsform ist die Verwendung eines kupfer-, kobalt- oder nickelabgebenden Mittels, insbesondere eines kobaltabgebenden Mittels, bevorzugt.

Das erfindungsgemässe Verfahren kann mit polarisierbaren Elektroden (z.B. Platin- oder vergoldete Platinelektroden) in Kombination mit einer Bezugselektrode, wie z.B. einer Kalomelelektrode, oder mit zwei polarisierbaren Elektroden ohne Bezugselektrode ausgeführt werden. Bevorzugt ist die Verwendung von zwei polarisierbaren Elektroden ohne Bezugselektrode, wobei insbesondere Doppelring-Elektroden, vorzugsweise Platin-Doppelring-Elektroden oder vergoldete Platin-Doppelring-Elektroden, verwendet werden. Die Polarisationsströme liegen bevorzugt in einem Bereich von 0,2 bis 10 µA.

In einer weiteren bevorzugten Ausführungsform des erfindungsgemässen Verfahrens wird die Zugabe des Farbstoffes oder des metallabgebenden Mittels durch eine voltametrisch ermittelte Messgrösse gesteuert; vorzugsweise wird die Umsetzung des Farbstoffes mit dem metallabgebenden Mittel automatisiert durchgeführt, wobei die Zugabe des Farbstoffes oder des metallabgebenden Mittels durch eine voltametrisch ermittelte Messgrösse gesteuert wird.

Als Messgrösse, die für die Steuerung der Zugabe verwendet werden kann, dienen die bei der diskontinuierlichen Dosierung des Farbstoffes oder des metallabgebenden Mittels auftretenden Potentialsprünge. Bei der diskontinuierlichen Dosierung, d.h. der portionsweisen Dosierung, bewirkt jede Zugabe einen sprunghaften Anstieg bzw. Abfall des Potentials, welches sich innerhalb kurzer Zeit wieder im Bereich des ursprünglichen Wertes des Potentials stabilisiert. Die so auftretenden Potentialsprünge zeigen mit fortlaufender portionsweiser Zugabe des Farbstoffes oder des metallabgebenden Mittels ein abnehmendes Rücklaufverhalten oder die Höhe der Potentialsprünge wird geringer, wobei Höhe und/oder Rücklaufverhalten des Potentials Informationen über den Umsetzungsgrad liefern. Wird kein wesentlicher Potentialsprung mehr beobachtet oder ist die Steigung des Rücklaufs des Potentials minimal, so wird die Zugabe beendet. Man geht daher z.B. so vor, dass anfangs der Farbstoff oder das metallabgebende Mittel kontinuierlich zugegeben wird und anschliessend diskontinuierlich zudosiert wird. Mit der diskontinuierlichen Dosierung wird z.B. nach Zugabe von ca. 70 bis 90% der Menge des theoretisch bei stöchiometrischer Umsetzung benötigten Farbstoffes oder des theoretisch benötigten metallabgebenden Mittels begonnen, die Dauer der einzelnen Dosierungsunterbrüche beträgt in der Regel 0,1 bis 15 Minuten. Durch Auswertung von Höhe und/oder Rücklaufverhalten der Potentialsprünge, z.B. mit dem Prozessrechner, wird der Metallisierungsendpunkt automatisiert erkannt und die Zugabe beendet. Für die Farbstoffe können die Grenzwerte der Höhe bzw. des Rücklaufverhaltens der Potentialsprünge so festgelegt werden, dass eine nahezu vollständige Umsetzung erreicht wird und nahezu kein Überschuss an Metallsalz oder Farbstoff vorhanden ist.

Vorzugsweise wird zu Beginn der Umsetzung der Farbstoff oder das metallabgebende Mittel kontinuierlich zugegeben und anschliessend diskontinuierlich zudosiert.

In einer besonders bevorzugten Ausführungsform des erfindungsgemässen Verfahrens wird der Farbstoff vorgelegt und das metallabgebende Mittel zudosiert und als Elektroden zwei polarisierbare Elektroden ohne Bezugselektrode verwendet.

In einer ganz besonders bevorzugten Ausführungsform des erfindungsgemässen Verfahrens wird die Umsetzung des Farbstoffes mit dem metallabgebenden Mittel zum Metallkomplexfarbstoff kontinuierlich im Anschluss an die Herstellung des Farbstoffes, ohne zwischenzeitliche Isolierung des Farbstoffes, ausgeführt, das metallabgebende Mittel zudosiert und der Farbstoff vorgelegt und als Elektroden zwei polarisierbare Elektroden ohne Bezugselektrode verwendet.

Die folgenden Beispiele dienen zur Erläuterung der Erfindung. Darin sind die Teile Gewichtsteile und die Prozente Gewichtsprozente. Die Temperaturen sind in Celsiusgraden angegeben. Die Beziehung zwischen Gewichtsteilen und Volumenteilen ist dieselbe wie diejenige zwischen Gramm und Kubikzentimeter.

### Beispiel 1: Eine wässrige Suspension, die 8% des Farbstoffes der Formel

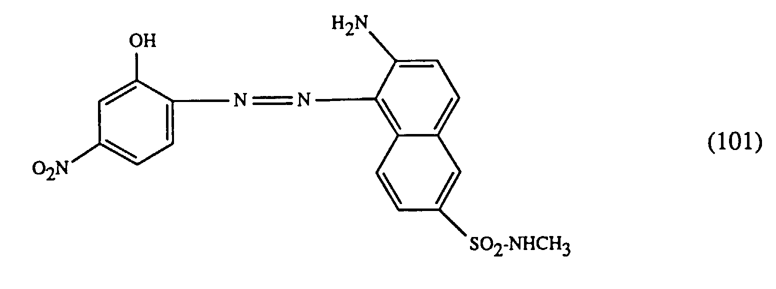

enthält, wird durch Diazotierung von 2-Amino-5-nitrophenol und Kupplung auf 2-Naphthylamin-6-sulfomethylamid in üblicher Weise hergestellt. Die Diazotierung erfolgt mit wässriger Natriumnitritlösung bei Raumtemperatur und einem pH-Wert von 0, überschüssige Nitritlösung wird durch Zugabe von Sulfaminsäure zerstört. Die Kupplung erfolgt in der erhaltenen Diazosuspension bei einer Temperatur von 40 bis 60° und einem pH-Wert von 1,5.

100 Teile der so erhaltenen Suspension, die 8 Teile des Farbstoffs der Formel (101) enthält, werden mit wässriger Natriumhydroxidlösung auf pH 12 gestellt und auf eine Temperatur von 60° erwärmt. Zu der Suspension werden unter ständigem Rühren bei einer Temperatur von 60° 16,91 Teile einer zuvor hergestellten wässrigen
Kobaltsulfat/Weinsäure-Lösung (hergestellt durch Lösen von 8,2 Teilen Kobaltsulfat, 8,4 Teilen Weinsäure und 11 Teilen einer 50%-igen wässrigen Natriumhydroxidlösung in 72,4 Teilen Wasser) innerhalb von 45 Minuten kontinuierlich zugegeben. Anschliessend wird 10 Minuten zur Stabilisierung des Potentials gewartet und daraufhin in Abständen von 1,5 Minuten Portionen der Kobaltsulfat/Weinsäure-Lösung von je 0,094 Teilen zugegeben, wobei die Reaktionsmischung ständig gerührt wird.

Während der Zugabe der Kobaltsulfat/Weinsäure-Lösung wird das Potential der Reaktionsmischung ständig mittels einer Platin-Doppelring-Elektrode gemessen, wobei zwischen den Platinringen eine konstante Stromstärke von 5 µA angelegt ist.

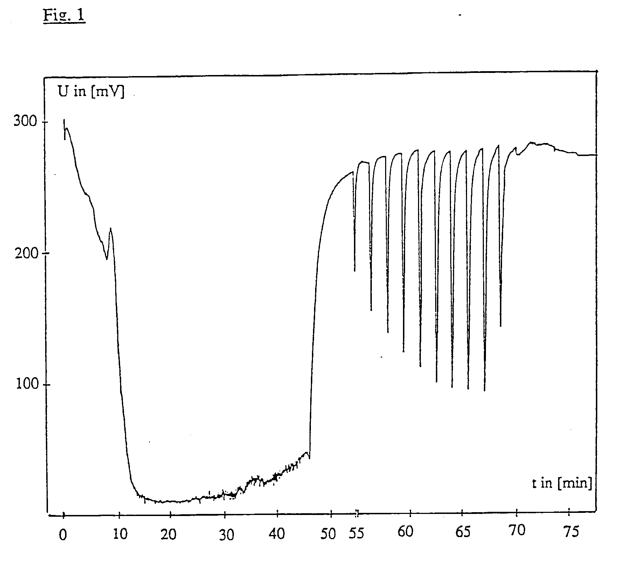

Bei der portionsweisen Zugabe der Kobaltsulfat/Weinsäure-Lösung bewirkt jede Zugabe einen Sprung des Potentials, welches sich rasch wieder stabilisiert. Nach 70 Minuten und der Zugabe von insgesamt 17,94 Teilen der Kobaltsulfat/Weinsäure-Lösung zeigt sich kein wesentlicher Potentialsprung mehr und die Zugabe wird beendet (siehe Fig. 1, worin der Verlauf des Potentials in Millivolt gegen die Zeit der Zugabe in Minuten aufgetragen ist).

Die dünnschicht-chromatographische Analyse einer Probe der erhaltenen Reaktionsmischung zeigt, dass kein Farbstoff der Formel (101) mehr enthalten ist. Der Kobalt-Nachweis mit Sulfid zeigt nur Spuren an.

Nach Abkühlung der Reaktionsmischung auf Raumtemperatur, anschliessender Filtration und Trocknung erhält man einen Metallkomplexfarbstoff, der der Verbindung der Formel 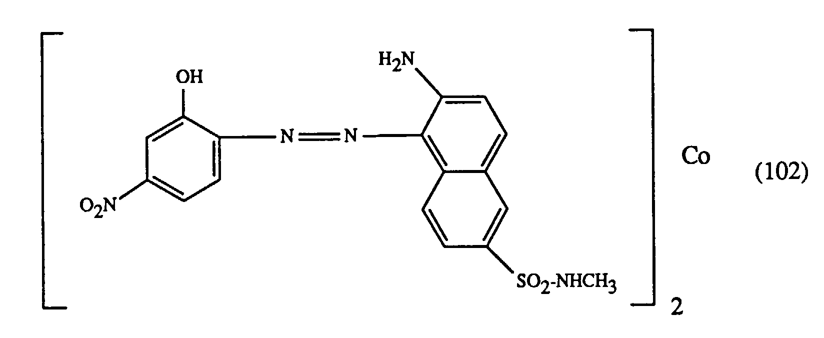 entspricht.

### Beispiel 2: Eine Mischung aus 408 Teilen des Farbstoffs der Formel

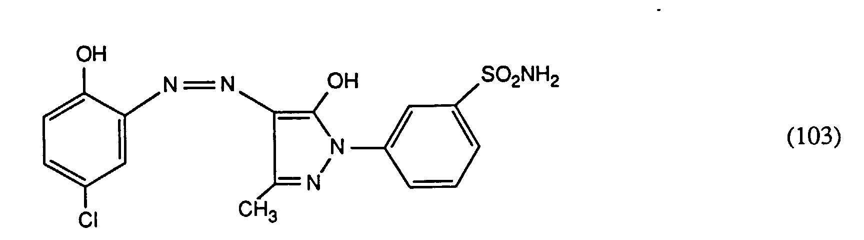

und 13000 Teilen Wasser wird mit einer wässrigen Natriumhydroxidlösung (36%) auf einen pH-Wert von 11 eingestellt und auf eine Temperatur von 80° erhitzt. Zu der Mischung werden 590 Teile einer zuvor hergestellten wässrigen Kobaltsulfat/Weinsäure-Lösung -Lösung (hergestellt durch Lösen von 80 Teilen Kobaltsulfat und 75 Teilen Weinsäure in 500 Teilen Wasser) innerhalb von 30 Minuten kontinuierlich zugegeben. Anschliessend wird gewartet, bis sich das voltametrische Potential stabilisiert hat. Dann werden im Abstand von ca. 10 Minuten jeweils 6 Teile der wässrigen Kobaltsulfat/Weinsäure-Lösung zugegeben. Während der Zugabe der Kobaltsulfat/Weinsäure-Lösung wird das Potential der Reaktionsmischung ständig mittels einer Platin-Doppelring-Elektrode gemessen, wobei zwischen den Platinringen eine konstante Stromstärke von 5 µA angelegt ist. Die Zugabe der Kobaltsulfat/Weinsäure-Lösung wird beendet, wenn annähernd keine Potentialänderung in Abhängigkeit von der Dosierung mehr beobachtet wird.

Die Reaktionsmasse wird mit Eis auf 50° abgekühlt. Nach Zugabe von Natriumchlorid und Einstellung eines pH-Wertes von 8 wird der erhaltene 1:2-Kobaltkomplexfarbstoff abfiltriert.

### Beispiel 3: Eine Mischung aus 1097 Teilen eines Farbstoffs, der in Form der freien Säure der Verbindung der Formel

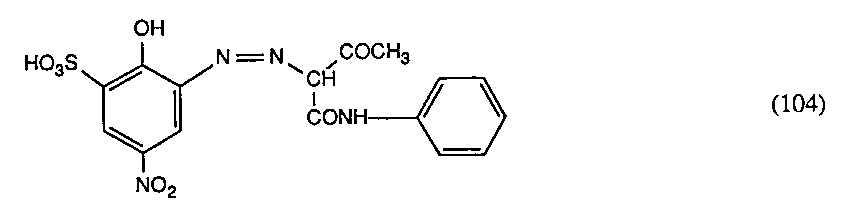

entspricht, und 12000 Teilen Wasser wird auf eine Temperatur von 70° erhitzt und durch Zugabe einer wässrigen Natriumhydroxidlösung (36%) auf einen pH-Wert von 8 eingestellt. Zu der Suspension werden 2000 Teile einer zuvor hergestellten wässrigen Kobaltsulfat/Weinsäure-Lösung (hergestellt durch Lösen von 200 Teilen Kobaltsulfat und 200 Teilen Weinsäure in 2000 Teilen Wasser und anschliessender Einstellung eines pH-Wertes von 11,4 mittels einer wässrigen Natriumhydroxidlösung (36%)) innerhalb von 60 Minuten kontinuierlich zugegeben. Während der Zugabe der Kobaltsulfat/Weinsäure-Lösung wird in die Reaktionsmischung Luft eingeblasen und das Potential der Reaktionsmischung ständig mittels einer Platin-Doppelring-Elektrode gemessen, wobei zwischen den Platinringen eine konstante Stromstärke von 5 µA angelegt ist Anschliessend werden im Abstand von ca. 5 Minuten jeweils 20 Teile der wässrigen Kobaltsulfat/Weinsäure-Lösung -Lösung zugegeben. Die Zugabe der Kobaltsulfat/Weinsäure-Lösung wird beendet, wenn der beobachtbare Potentialsprung im Zusammenhang mit der Zugabe der Kobaltsulfat/Weinsäure-Lösung deutlich abnimmt.

Nach Zugabe von Natriumchlorid und Einstellung eines pH-Wertes von 7 bis 8 wird der erhaltene 1:2-Kobaltkomplexfarbstoff abfiltriert.

### Beispiel 4: Eine Mischung aus 335 Teilen des Farbstoffs der Formel

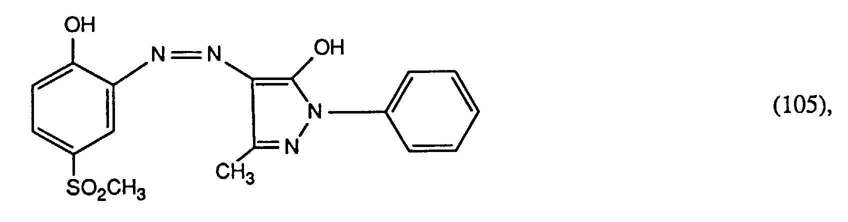

439 Teilen des Farbstoffs der Formel 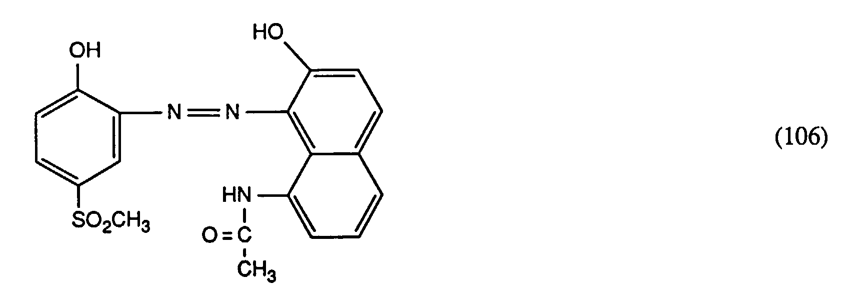 und 22000 Teilen Wasser wird auf eine Temperatur von 45° erhitzt und durch Zugabe einer wässrigen Natriumhydroxidlösung (36%) auf einen pH-Wert von 9 eingestellt. Zu der Mischung werden 1500 Teile einer zuvor hergestellten wässrigen Kobaltsulfat/Weinsäure-Lösung (hergestellt durch Lösen von 155 Teilen Kobaltsulfat und 150 Teilen Weinsäure in 1500 Teilen Wasser und anschliessender Einstellung eines pH-Wertes von 11,5 mittels einer wässrigen Natriumhydroxidlösung (36%)) innerhalb von 45 Minuten kontinuierlich zugegeben. Während der Zugabe der Kobaltsulfat/Weinsäure-Lösung wird der pH der Reaktionsmischung bei einem Wert von 9 gehalten und das Potential der Reaktionsmischung ständig mittels einer Platin-Doppelring-Elektrode gemessen, wobei zwischen den Platinringen eine konstante Stromstärke von 5 µA angelegt ist. Anschliessend wird 60 Minuten gewartet und dann im Abstand von ca. 10 Minuten jeweils 15 Teile der wässrigen Kobaltsulfat/Weinsäure-Lösung zugegeben. Die Zugabe wird beendet, wenn sich das Potential mit der Zugabe der Kobaltsulfat/Weinsäure-Lösung nicht mehr ändert.

Nach Zugabe von Natriumchlorid wird das erhaltene Reaktionsprodukt abfiltriert. Man erhält eine Mischung aus den symmetrischen 1:2-Kobaltkomplexfarbstoffen der Verbindungen der Formeln (104) und (105) sowie dem entsprechenden asymmetrischen 1 :2-Kobaltkomplexfarbstoff.

### Beispiel 5: Eine Mischung aus 790 Teilen des Farbstoffs der Formel

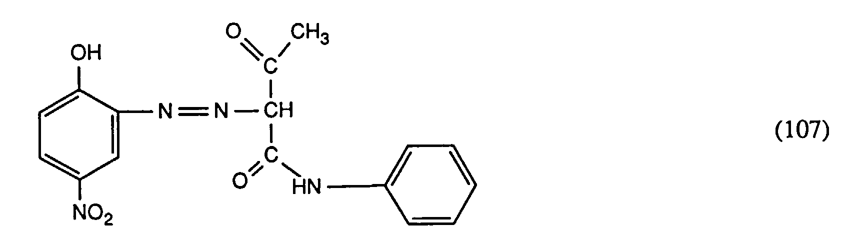

und 20000 Teilen Wasser wird auf eine Temperatur von 85° erhitzt und durch Zugabe einer wässrigen Natriumhydroxidlösung (36%) auf einen pH-Wert von 11,5 eingestellt. Zu der Mischung werden 1900 Teile einer zuvor hergestellten wässrigen Kobaltsulfat/Weinsäure-Lösung -Lösung (hergestellt durch Lösen von 180 Teilen Kobaltsulfat und 170 Teilen Weinsäure in 2000 Teilen Wasser und anschliessender Einstellung eines pH-Wertes von 11,5 mittels einer wässrigen Natriumhydroxidlösung (36%)) innerhalb von 45 Minuten kontinuierlich zugegeben. Während der Zugabe der Kobaltsulfat/Weinsäure-Lösung wird Luft in die Reaktionsmischung geblasen und das Potential der Reaktionsmischung ständig mittels einer Platin-Doppelring-Elektrode gemessen, wobei zwischen den Platinringen eine konstante Stromstärke von 5 µA angelegt ist Nach 30 Minuten werden im Abstand von 5 Minuten jeweils 20 Teile der wässrigen Kobaltsulfat/Weinsäure-Lösung zugegeben. Die Zugabe wird beendet, wenn sich das Potential mit der Zugabe der Kobaltsulfat/Weinsäure-Lösung nicht mehr ändert.

Nach Zugabe von Natriumchlorid und Einstellung eines pH-Wertes von 5 wird der erhaltene 1:2-Kobaltkomplexfarbstoff abfiltriert.

### Beispiel 6: Eine wässrige Suspension, die 5,2% des Farbstoffes der Formel

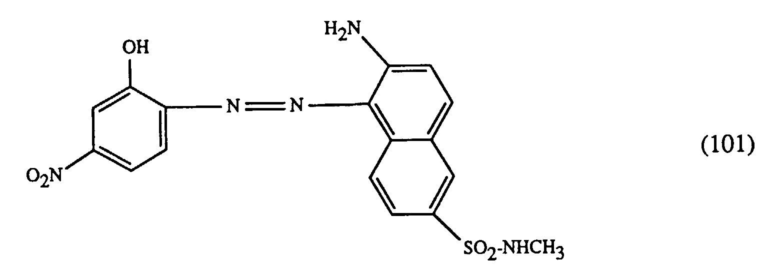

enthält, wird durch Diazotierung von 2-Amino-5-nitrophenol und Kupplung auf 22-Naphthylamin-6-sulfomethylamid in üblicher Weise hergestellt Die Diazotierung erfolgt mit wässriger Natriumnitritlösung bei Raumtemperatur und einem pH-Wert von 0, überschüssige Nitritlösung wird durch Zugabe von Sulfaminsäure zerstört. Die Kupplung erfolgt in der erhaltenen Diazosuspension bei einer Temperatur von 40 bis 60° und einem pH-Wert von 1,5.

15000 Teile der so erhaltenen Suspension, die 780 Teile des Farbstoffs der Formel (101) enthält, werden mit wässriger Natriumhydroxidlösung (36%) auf pH 12 gestellt. Zu der Suspension werden 5000 Teile einer zuvor hergestellten wässrigen Kupfersulfat/Ammoniak-Lösung (hergestellt durch Lösen von 320 Teilen Kupfersulfat und 480 Teilen Ammoniak (konz.) in 5000 Teilen Wasser) innerhalb von 45 Minuten kontinuierlich zugegeben, wobei der pH durch Zugabe einer wässrigen Natriumhydroxidlösung (36%) bei einem Wert von 12 gehalten wird. Während der Zugabe der Kupfersulfat/Ammoniak-Lösung wird das Potential der Reaktionsmischung ständig mittels einer Platin-Doppelring-Elektrode gemessen, wobei zwischen den Platinringen eine konstante Stromstärke von 5 µA angelegt ist. Anschliessend werden im Abstand von 5 Minuten jeweils 50 Teile der wässrigen Kupfersulfat/Ammoniak-Lösung zugegeben. Die Zugabe wird beendet, wenn sich nach auftretenden Potentialsprüngen nahezu kein Rücklauf des Potentials mehr zeigt.

Nach Zugabe von Natriumchlorid wird der erhaltene 1:1-Kupferkomplexfarbstoff abfiltriert.

### Beispiel 7: Eine wässrige Suspension, die 6,25% eines Farbstoffes enthält, der in Form der freien Säure der Verbindung der Formel

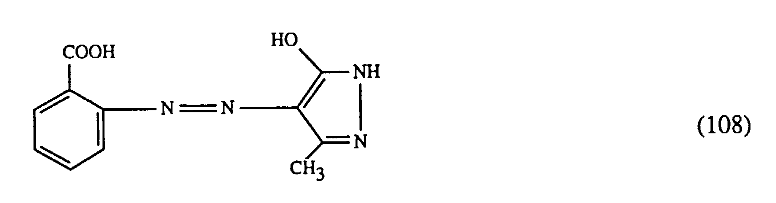

entspricht, wird durch Diazotierung von 2-Aminobenzoesäure und Kupplung auf 3-Methyl-5-pyrazolon in üblicher Weise hergestellt. Die Diazotierung erfolgt mit wässriger Natriumnitritlösung bei einer Temperatur von 0 bis 5° und einem pH-Wert von 1, überschüssige Nitritlösung wird durch Zugabe von Sulfaminsäure zerstört. Die Kupplung erfolgt in der erhaltenen Diazosuspension bei einer Temperatur von 0 bis 20° und einem pH-Wert von 8,0 bis 8,5.

Zu 1200 Teilen der so erhaltenen Suspension, die 75 Teile des Farbstoffs der Formel (108) enthält, werden 144 Teile einer zuvor hergestellten wässrigen Nickelchlorid-Lösung (hergestellt durch Lösen von 68 Teilen Nickelchlorid in 112 Teilen Wasser) innerhalb von 60 Minuten kontinuierlich zugegeben, wobei der pH durch Zugabe einer wässrigen Natriumhydroxidlösung (36%) bei einem Wert von 6 bis 7 gehalten wird. Anschliessend wird die Reaktionsmischung 60 Minuten gerührt. Während der Zugabe der wässrigen Nickelchlorid-Lösung wird das Potential der Reaktionsmischung ständig mittels einer Platin-Doppelring-Elektrode gemessen, wobei zwischen den Platinringen eine konstante Stromstärke von 5 µA angelegt ist. Anschliessend werden im Abstand von 5 Minuten jeweils 1 Teil der wässrigen Nickelchlorid-Lösung zugegeben. Die Zugabe wird beendet, wenn das Potential mit der Zugabe der wässrigen Nickelchlorid-Lösung einen deutlichen Sprung macht und nicht mehr zurückläuft. Die erhaltene 1:1-Nickelkomplexverbindung wird durch Filtration isoliert.

### Beispiel 8: Eine Mischung aus 59,2 Teilen des Farbstoffes der Formel

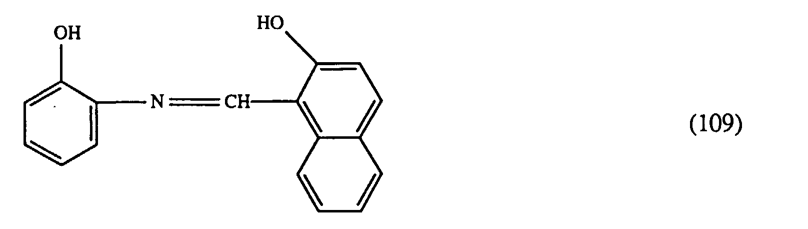

und 940 Teilen Wasser wird auf eine Temperatur von 85° erhitzt. Zu der Mischung werden 1000 Teile einer zuvor hergestellten wässrigen Kupfersulfat/Ammoniak-Lösung (hergestellt durch Lösen von 58 Teilen Kupfersulfat und 49 Teilen Ammoniak (30%) in 1200 Teilen Wasser) innerhalb von 15 Minuten kontinuierlich zugegeben. Während der Zugabe der Kupfersulfat/Ammoniak-Lösung wird das Potential der Reaktionsmischung ständig mittels einer Platin-Doppelring-Elektrode gemessen, wobei zwischen den Platinringen eine konstante Stromstärke von 5 µA angelegt ist. Nach 30 Minuten werden im Abstand von 10 Minuten jeweils 10 Teile der wässrigen Kupfersulfat/Ammoniak-Lösung zugegeben. Die Zugabe wird beendet, wenn der mit der Zugabe der Kupfersulfat/Ammoniak-Lösung auftretende Potentialsprung nahezu keinen Rücklauf mehr zeigt Der erhaltene 1:1-Kupferkomplexfarbstoff wird durch Filtration isoliert.

## Patentansprüche

1. Verfahren zur Herstellung von Metallkomplexfarbstoffen unter Betriebsbedingungen, worin man mindestens einen Farbstoff mit einem metallabgebenden Mittel umsetzt, dadurch gekennzeichnet, dass die Zugabe des metallabgebenden Mittels oder des Farbstoffes vor Erreichung des Metallisierungsendpunktes diskontinuierlich erfolgt und der Metallisierungsendpunkt voltametrisch bestimmt wird.

2. Verfahren gemäss Anspruch 1, dadurch gekennzeichnet, dass man als Farbstoffe Mono-, Dis- oder Polyazofarbstoffe oder Azomethinfarbstoffe, insbesondere Monoazofarbstoffe, verwendet.

3. Verfahren gemäss einem der Ansprüche 1 und 2, dadurch gekennzeichnet, dass man als metallabgebende Mittel kobalt-, nickel- oder kupferabgebende Mittel, insbesondere kobaltabgebende Mittel, verwendet.

4. Verfahren gemäss einem der Ansprüche 1 bis 3, dadurch gekennzeichnet, dass man die Umsetzung in Gegenwart eines Oxidationsmittels ausführt.

5. Verfahren gemäss Anspruch 4, dadurch gekennzeichnet, dass man im Verlauf der Umsetzung Luft in die Reaktionsmischung einbläst.

6. Verfahren gemäss einem der Ansprüche 1 bis 5, dadurch gekennzeichnet, dass man die voltametrische Bestimmung mittels zweier polarisierbarer Elektroden ohne Bezugselektrode ausführt.

7. Verfahren gemäss Anspruch 6, dadurch gekennzeichnet, dass man als polarisierbare Elektroden Doppelring-Elektroden, insbesondere Platin-Doppelring-Elektroden oder vergoldete Platin-Doppelring-Elektroden, verwendet.

8. Verfahren gemäss einem der Ansprüche 1 bis 7, dadurch gekennzeichnet, dass man die Umsetzung des Farbstoffes mit dem metallabgebenden Mittel automatisiert durchführt, wobei die Zugabe des Farbstoffes oder des metallabgebenden Mittels durch eine voltametrisch ermittelte Messgrösse gesteuert wird.

9. Verfahren gemäss einem der Ansprüche 1 bis 8, dadurch gekennzeichnet, dass man den Farbstoff vorlegt und das metallabgebende Mittel zudosiert.

10. Verfahren gemäss einem der Ansprüche 1 bis 9, dadurch gekennzeichnet, dass man die Umsetzung des Farbstoffes mit dem metallabgebenden Mittel in konzentrierten Lösungen oder insbesondere in Suspensionen ausführt.

11. Verfahren gemäss Anspruch 10, dadurch gekennzeichnet, dass man die Umsetzung des Farbstoffes mit dem metallabgebenden Mittel in konzentrierten wässrigen Lösungen oder insbesondere in wässrigen Suspensionen ausführt.

12. Verfahren gemäss einem der Ansprüche 1 bis 11, dadurch gekennzeichnet, dass man die Umsetzung des Farbstoffes mit dem metallabgebenden Mittel zum Metallkomplexfarbstoff kontinuierlich im Anschluss an die Herstellung des Farbstoffes ausführt.

13. Verfahren gemäss einem der Ansprüche 1 bis 12, dadurch gekennzeichnet, dass man die Umsetzung des Farbstoffes mit dem metallabgebenden Mittel zum Metallkomplexfarbstoff kontinuierlich im Anschluss an die Herstellung des Farbstoffes ausführt, das metallabgebende Mittel zudosiert und den Farbstoff vorlegt und als Elektroden zwei polarisierbare Elektroden ohne Bezugselektrode verwendet.

## Claims

1. A process for the preparation of a metal complex dye under production conditions, involving reacting at least one dye with a metal donor, which comprises adding said metal donor or said dye discontinuously before the end point of the metallising is reached, and determining the end point of the metallising voltametrically.

2. A process according to claim 1, wherein the dyes used are of monoazo, disazo or polyazo dyes or azomethine dyes, especially monoazo dyes.

3. A process according to either claim 1 or claim 2, wherein the metal donor is a cobalt, nickel or copper donor, especially a cobalt donor.

4. A process according to any one of claims 1 to 3, wherein the reaction is carried out in the presence of an oxidising agent.

5. A process according to claim 4, wherein air is blown into the reaction mixture in the course of the reaction.

6. A process according to any one of claims 1 to 5, wherein the voltametric determination is carried out using two polarisable electrodes without a reference electrode.

7. A process according to claim 6, wherein the polarisable electrodes used are double-ring electrodes, especially platinum double-ring electrodes or gold-plated platinum double-ring electrodes.

8. A process according to any one of claims 1 to 7, which comprises carrying out the reaction of the dye with the metal donor by an automated process in which the addition of the dye or metal donor is controlled by a voltametrically determined measured variable.

9. A process according to any one of claims 1 to 8, which comprises charging the dye to the reactor and metering in the metal donor thereto.

10. A process according to any one of claims 1 to 9, which comprises carrying out the reaction of the dye with the metal donor in a concentrated solution or, in particular, in a suspension.

11. A process according to claim 10, which comprises carrying out the reaction of the dye with the metal donor in a concentrated aqueous solution or, in particular, in an aqueous suspension.

12. A process according to any one of claims 1 to 11, which comprises carrying out the reaction of the dye with the metal donor to give the metal complex dye continuously following the synthesis of the dye.

13. A process according to any one of claims 1 to 12, which comprises carrying out the reaction of the dye with the metal donor to give the metal complex dye continuously following the synthesis of the dye, metering in the metal donor and charging the dye to the reactor, and using as electrodes two polarisable electrodes without a reference electrode.

## Revendications

1. Procédé de préparation de colorants complexes métallifères, dans des conditions d'exploitation, par réaction d'au moins un colorant avec un produit cédant du métal, **caractérisé** par le fait qu'avant d'atteindre la fin de la métallisation, l'addition du produit cédant du métal ou du colorant s'effectue de façon discontinue et que la fin de la métallisation est déterminé par voltamétrie.

2. Procédé selon la revendication 1, **caractérisé** par le fait qu'on utilise comme colorant des colorants monoazoïques, disazoïques ou polyazoïques ou bien des colorants azométhiniques, et en particulier des colorants monoazoïques.

3. Procédé selon l'une des revendications 1 ou 2, **caractérisé** par le fait qu'on utilise comme produit cédant du métal un produit cédant du cobalt, du nickel ou du cuivre, et en particulier un produit cédant du cobalt.

4. Procédé selon l'une des revendications 1 à 3, **caractérisé** par le fait que la réaction s'effectue en présence d'un agent oxydant.

5. Procédé selon la revendication 4, **caractérisé** par le fait que pendant la réaction on insuffle de l'air dans le mélange réactionnel.

6. Procédé selon l'une des revendications 1 à 5, **caractérisé** par le fait que la détermination voltamétrique s'effectue à l'aide de deux électrodes polarisables sans électrode de référence.

7. Procédé selon la revendication 6, **caractérisé** par le fait qu'on utilise comme électrodes polarisables des électrodes bicycliques et en particulier des électrodes bicycliques en platine ou bien des électrodes bicycliques en platine doré.

8. Procédé selon l'une des revendications 1 à 7, **caractérisé** par le fait qu'on effectue la réaction du colorant avec le produit cédant du métal, de façon automatique, l'addition du colorant ou du produit cédant du métal étant contrôlé par une grandeur déterminée par voltamétrie.

9. Procédé selon l'une des revendications 1 à 8, **caractérisé** par le fait qu'on introduit d'abord le colorant et qu'on ajoute ensuite par titrage ou dosage le produit cédant du métal.

10. Procédé selon l'une des revendications 1 à 9, **caractérisé** par le fait qu'on effectue la réaction du colorant avec le produit cédant du métal, en solution concentrée ou en particulier en suspensions.

11. Procédé selon la revendication 10, **caractérisé** par le fait qu'on effectue la réaction du colorant avec le produit cédant du métal dans des solutions aqueuses concentrées ou en particulier dans des suspensions aqueuses concentrées.

12. Procédé selon l'une des revendications 1 à 11, **caractérisé** par le fait que la réaction du colorant avec le produit cédant du métal est réalisée en continu, à la suite de la préparation du colorant et conduit à un colorant complexe métallifère.

13. Procédé selon l'une des revendications 1 à 12, **caractérisé** par le fait que la réaction du colorant avec le produit cédant du métal s'effectue en continu pour aboutir à un colorant complexe métallifère, à la suite de la préparation du colorant qui est présent et auquel on ajoute par titrage le produit cédant du métal, et qu'on utilise comme électrodes deux électrodes polarisables sans électrode de référence.
